# EUROPEAN PATENT SPECIFICATION

(11) **EP 3 675 541 B1**
(45) Date of publication and mention of the grant of the patent: **04.01.2023**
(21) Application number: 18859304.0
(22) Date of filing: 12.09.2018
(51) Int. Cl.: H04W 12/06, H04W 12/71, H04W 12/72, H04L 9/40, H04W 88/04

(54) **AUTHENTICATION METHOD AND DEVICE**
AUTHENTIFIZIERUNGSVERFAHREN UND -VORRICHTUNG
PROCÉDÉ ET DISPOSITIF D'AUTHENTIFICATION

(30) Priority: 25.09.2017 CN 201710876094
(43) Date of publication of application: 01.07.2020
(73) Proprietor: Huawei Technologies Co., Ltd., Longgang District Shenzhen, Guangdong 518129 (CN)
(72) Inventor: CHEN, Heng, Shenzhen, Guangdong 518129 (CN)
(74) Representative: Thun, Clemens
(86) International application number: PCT/CN2018/105175
(87) International publication number: WO 2019/056971

(56) References cited:
- EP-A1- 3 086 586
- WO-A1-2009/094942
- WO-A1-2018/076553
- CN-A- 103 841 558
- CN-A- 103 841 558
- CN-A- 104 994 106
- CN-A- 105 991 619
- CN-A- 106 030 596
- CN-A- 106 161 359
- CN-A- 106 211 152
- CN-A- 106 709 713
- US-A1- 2015 281 937
- US-A1- 2016 197 916
- HUAWEI: "Way forward w/ NSSAI", SA WG2 Meeting #119 S 2-170812, 17 February 2017 (2017-02-17), XP051216933,

## Description

### TECHNICAL FIELD

This application relates to the field of communications technologies, and in particular, to an authentication method and a device.

### BACKGROUND

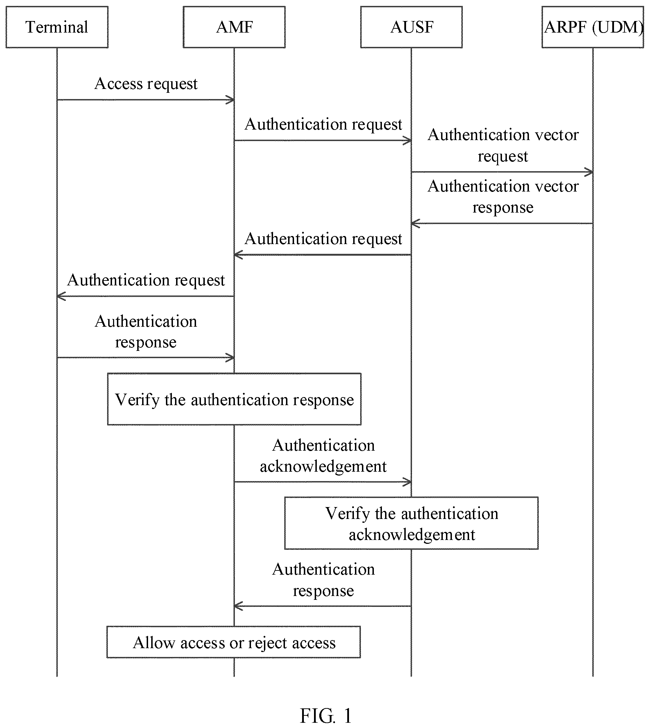

In an existing technology, when accessing a network, a terminal needs to send an access request to a network device, and the network device authenticates the terminal after receiving the access request, to verify validity of the terminal. Specifically, as shown in FIG. 1, a terminal sends an access request to an access and mobility management function (access and mobility management function, AMF); after receiving the access request, the AMF sends an authentication request to an authentication server function (authentication server function, AUSF); after receiving the authentication request, the AUSF sends an authentication vector request to a unified data management (unified data management, UDM); the UDM returns an authentication vector response to the AUSF, where the response includes an authentication vector of the terminal; the AUSF sends the authentication request to the AMF, where the request may include the authentication vector and some or all of expected user responses (expected user response, XRES); the AMF sends the authentication request to the terminal, and the terminal returns an authentication response to the AMF, where the response includes an XRES computed by the terminal; the AMF confirms whether the XRES sent by the terminal is consistent with the XRES sent by the AUSF, and rejects the access of the terminal if the XRES sent by the terminal is inconsistent with the XRES sent by the AUSF, or sends an authentication response to the AUSF if the XRES sent by the terminal is consistent with the XRES sent by the AUSF, where the authentication response carries the XRES computed by the terminal; the AUSF authenticates the terminal based on the XRES, and sends an authentication result to the AMF; and if the authentication succeeds, the AMF continues to perform an access procedure for the terminal, and if the authentication fails, the AMF rejects the access of the terminal.

In the fifth generation (the fifth generation, 5G) mobile communications system or another future communications system, there may be a plurality of terminal access manners. For example, some terminals can access a network by using another terminal with a relay function. Specifically, some terminals without a function of accessing a mobile communications network, such as a wearable device, an intelligent medical terminal, and the like, can access the mobile communications network by using a mobile phone with a relay function, an in-vehicle mobile terminal, and the like. Alternatively, some terminals with a strict requirement for electricity consumption, such as a smart band, a smart water meter, and the like, can establish a connection with the terminal with the relay function by using a relatively power-efficient manner such as Bluetooth communication, thereby accessing the mobile communications network. However, in the existing technology, there is no method of authenticating the terminals that access the mobile communications network by using the relay terminal.

The document CN 103 841 558 A shows a terminal authentication method and system, at an according mobile communication terminal.

The document WO 2009/094942 A1 shows a method for establishing a security association at a communication network system.

The document EP 3 086 586 A1 shows a terminal authentication method at an according device and system.

### SUMMARY

The present invention is defined by the independent claims. Preferred embodiments are defined in the dependent claims. Embodiments labelled as inventive embodiments in the following, which are not covered by the scope of protection defined by the independent claims, are to be understood as examples helpful for understanding the invention, but not as embodiments of the invention. This application provides an authentication method and a device, to authenticate a terminal that accesses a network by using another terminal.

According to a first aspect, an embodiment of this application provides an authentication method, including:
receiving, by a first network device, an authentication request sent by a second network device, where the authentication request includes an identifier of a first terminal that is unconnected to a network and an identifier of a second terminal that is connected to the network; authenticating, by the first network device based on a preset correspondence between a first-type terminal and a second-type terminal,
validity of accessing, by the first terminal, the network by using the second terminal, where a first-type terminal is allowed to access the network by using a second-type terminal corresponding to the first-type terminal; and sending, by the first network device, an authentication response to the second network device, where the authentication response carries indication information used to indicate whether the first terminal is allowed to access the network by using the second terminal.

According to the foregoing method, the first network device implements authentication on validity of accessing, by the first terminal, the network by using the second terminal, so that the network-side device can manage the first terminal, to prevent a case in which a network-side device fails to detect the access of the first terminal when the first terminal accesses the network by using the second terminal.

In a possible implementation, the authenticating, by the first network device based on a preset correspondence between a first-type terminal and a second-type terminal, validity of accessing, by the first terminal, the network by using the second terminal includes: allowing, by the first network device if the correspondence between a first-type terminal and a second-type terminal includes a correspondence between the first terminal and the second terminal, the first terminal to access the network by using the second terminal.

In the foregoing method, if the preset correspondence includes the correspondence between the first terminal and the second terminal, it is considered that the first terminal has accessed the network by using the second terminal previously and the authentication succeeds. The first network device can determine that the first terminal is a valid terminal, and allow the first terminal to access the network by using the second terminal.

In a possible implementation, the authenticating, by the first network device based on a preset correspondence between a first-type terminal and a second-type terminal, validity of accessing, by the first terminal, the network by using the second terminal includes: sending, by the first network device if the correspondence between a first-type terminal and a second-type terminal does not include terminal information corresponding to first terminal information, a verification request to the second terminal; and receiving, by the first network device, a verification response sent by the second terminal, where the verification response includes the indication information used to indicate whether the first terminal is allowed to access the network by using the second terminal.

In the foregoing method, if the preset correspondence does not include a terminal corresponding to the first terminal, it is considered that the first terminal requests to access the network by using another terminal for the first time. In this case, the first network device can further verify, to the second terminal, whether to allow the first terminal to access the network by using the second terminal, to implement authentication on the first terminal.

In a possible implementation, the authenticating, by the first network device based on a preset correspondence between a first-type terminal and a second-type terminal, validity of accessing, by the first terminal, the network by using the second terminal includes: sending, by the first network device if terminal information that is in the correspondence between a first-type terminal and a second-type terminal and corresponds to first terminal information does not include second terminal information, a verification request to a third terminal, where the third terminal is a terminal corresponding to the terminal information corresponding to the first terminal information in the correspondence between a first-type terminal and a second-type terminal; and receiving, by the first network device, a verification response sent by the third terminal, where the verification response includes the indication information used to indicate whether the first terminal is allowed to access the network by using the second terminal.

In the foregoing method, if the preset correspondence includes the terminal corresponding to the first terminal, but the terminal corresponding to the first terminal is a third terminal other than the second terminal, it is considered that the first terminal has accessed the network by using the third terminal, but has never accessed the network by using the second terminal. In this case, the first network device can verify, to the third terminal, whether to allow the first terminal to access the network by using the second terminal, to implement authentication on the first terminal. For example, a smartwatch has previously accessed the network by using a mobile phone, and the first network device stores a correspondence between the smartwatch and the mobile phone. Subsequently, the smartwatch requests to access the network by using an in-vehicle terminal, then the first network device can initiate an authentication procedure to the mobile phone corresponding to the smartwatch, to implement authentication on the smartwatch.

In a possible implementation, if the indication information in the verification response received by the first network device indicates that the first terminal is allowed to access the network by using the second terminal, the method further includes: storing, by the first network device, a correspondence between the first terminal and the second terminal into the correspondence between a first-type terminal and a second-type terminal.

In the foregoing method, if the first terminal is allowed to access the network by using the second terminal, the first network device can store the correspondence between the first terminal and the second terminal, so that when the first terminal requests to access the network by using the second terminal again, the first network device can directly allow, based on the stored correspondence, the first terminal to access the network by using the second terminal, and there is no need to initiate the authentication procedure.

In a possible implementation, the identifier includes any one of the following information: an international mobile subscriber identity (international mobile subscriber identification number, IMSI), an international mobile equipment identity (international mobile equipment identity, IMEI) or a media access control (media access control, MAC) address.

According to a second aspect, an embodiment of this application provides an authentication method, including:
receiving, by a second network device, a verification request sent by a third network device, where the verification request includes an identifier of a first terminal that has not accessed a network and an identifier of a second terminal that has accessed the network, and the verification request is used to request the second network device to verify validity of accessing, by the first terminal, the network by using the second terminal; sending, by the second network device if a correspondence between a first-type terminal and a second-type terminal does not include a correspondence between the first terminal and the second terminal, an authentication request to a first network device, where the authentication request includes the identifier of the first terminal and the identifier of the second terminal, and the authentication request is used to request the first network device to authenticate validity of accessing, by the first terminal, the network by using the second terminal; receiving, by the second network device, an authentication response sent by the first network device, where the authentication response carries indication information used to indicate whether the first terminal is allowed to access the network by using the second network device; and sending, by the second network device, a first verification response to the third network device, where the first verification response carries the indication information.

According to the foregoing method, the second network device implements authentication on validity of accessing, by the first terminal, the network by using the second terminal, so that the network-side device can manage the first terminal, to prevent a case in which a network-side device fails to detect the access of the first terminal when the first terminal accesses the network by using the second terminal.

In a possible implementation, the method further includes: storing, by the second network device if the indication information indicates that the first terminal is allowed to access the network by using the second network device, the correspondence between the first terminal and the second terminal into the correspondence between a first-type terminal and a second-type terminal.

In the foregoing method, if the first network device indicates that the first terminal is allowed to access the network by using the second terminal, the second network device can store the correspondence between the first terminal and the second terminal, so that when the first terminal requests to access the network by using the second terminal again, the second network device can directly allow, based on the stored correspondence, the first terminal to access the network by using the second terminal, and there is no need to initiate an authentication procedure to the first network device.

In a possible implementation, the method further includes: sending, by the second network device if the correspondence between a first-type terminal and a second-type terminal includes the correspondence between the first terminal and the second terminal, a second verification response to the third network device, where the second verification response includes the indication information used to indicate that the first terminal is allowed to access the network by using the second network device.

In the foregoing method, if the preset correspondence includes the correspondence between the first terminal and the second terminal, it is considered that the first terminal has accessed the network by using the second terminal previously and the authentication succeeds. The second network device can determine that the first terminal is a valid terminal, and allow the first terminal to access the network by using the second terminal without initiating the authentication procedure to the first network device.

In a possible implementation, the identifier includes at least one of the following information: an IMSI, an IMEI or a MAC address.

According to a third aspect, an embodiment of this application provides an authentication method, including:
receiving, by a third network device, an access request sent by a second terminal, where the access request includes an identifier of a first terminal and an identifier of a second terminal, and the access request is used to request allowing the first terminal to access a network by using the second terminal; sending, by the third network device, a verification request to a second network device, where the verification request includes the identifier of the first terminal that has not accessed the network and the identifier of the second terminal that has accessed the network, and the verification request is used to request the second network device to verify validity of accessing, by the first terminal, the network by using the second terminal; and receiving, by the third network device, a verification response sent by the second network device, where the verification response includes indication information used to indicate whether the first terminal is allowed to access the network by using the second network device.

In the foregoing method, the third network device sends the verification request including the identifiers of the first terminal and the second terminal to the second network device, to implement authentication on validity of accessing, by the first terminal, the network by using the second terminal, so that the network-side device can manage the first terminal, to prevent a case in which a network-side device fails to detect the access of the first terminal when the first terminal accesses the network by using the second terminal.

According to a fourth aspect, this embodiment of this application provides a network device. The network device may be used as a first network device, and includes a processor, and a memory and a transceiver that are connected to the processor.

The processor is configured to read a computer program pre-stored in the memory to perform the following steps:
receiving, by using the transceiver, an authentication request sent by a second network device, where the authentication request includes an identifier of a first terminal that is unconnected to a network and an identifier of a second terminal that is connected to the network; authenticating, based on a preset correspondence between a first-type terminal and a second-type terminal, validity of accessing, by the first terminal, the network by using the second terminal, where a first-type terminal is allowed to access the network by using a second-type terminal corresponding to the first-type terminal; and sending, by using the transceiver, an authentication response to the second network device, where the authentication response carries indication information used to indicate whether the first terminal is allowed to access the network by using the second terminal.

In a possible implementation, when authenticating, based on the preset correspondence between a first-type terminal and a second-type terminal, validity of accessing, by the first terminal, the network by using the second terminal, the processor is specifically configured to: allow, if the correspondence between a first-type terminal and a second-type terminal includes a correspondence between the first terminal and the second terminal, the first terminal to access the network by using the second terminal.

In a possible implementation, when authenticating, based on the preset correspondence between a first-type terminal and a second-type terminal, validity of accessing, by the first terminal, the network by using the second terminal, the processor is specifically configured to: send, by using the transceiver if the correspondence between a first-type terminal and a second-type terminal does not include terminal information corresponding to first terminal information, a verification request to the second terminal; and receive, by using the transceiver, a verification response sent by the second terminal, where the verification response includes the indication information used to indicate whether the first terminal is allowed to access the network by using the second terminal.

In a possible implementation, when authenticating, based on the preset correspondence between a first-type terminal and a second-type terminal, validity of accessing, by the first terminal, the network by using the second terminal, the processor is specifically configured to: send, by using the transceiver if terminal information that is in the correspondence between a first-type terminal and a second-type terminal and corresponds to first terminal information does not include second terminal information, a verification request to a third terminal, where the third terminal is a terminal corresponding to the terminal information corresponding to the first terminal information in the correspondence between a first-type terminal and a second-type terminal; and receive, by using the transceiver, a verification response sent by the third terminal, where the verification response includes the indication information used to indicate whether the first terminal is allowed to access the network by using the second terminal.

In a possible implementation, if the indication information indicates that the first terminal is allowed to access the network by using the second terminal, the processor is further configured to: store the correspondence between the first terminal and the second terminal into the correspondence between a first-type terminal and a second-type terminal.

In a possible implementation, the identifier includes at least one of the following information: an IMSI, an IMEI or a MAC address.

According to a fifth aspect, this embodiment of this application provides a network device. The network device may be used as a second network device, and includes a processor, and a memory and a transceiver that are connected to the processor.

The processor is configured to read a computer program pre-stored in the memory to perform the following steps:
receiving, by using the transceiver, a verification request sent by a third network device, where the verification request includes an identifier of a first terminal that has not accessed a network and an identifier of a second terminal that has accessed the network, and the verification request is used to request the second network device to verify validity of accessing, by the first terminal, the network by using the second terminal; sending, by using the transceiver if a correspondence between a first-type terminal and a second-type terminal does not include a correspondence between the first terminal and the second terminal, an authentication request to a first network device, where the authentication request includes the identifier of the first terminal and the identifier of the second terminal, and the authentication request is used to request the first network device to authenticate validity of accessing, by the first terminal, the network by using the second terminal; receiving, by using the transceiver, an authentication response sent by the first network device, where the authentication response carries indication information used to indicate whether the first terminal is allowed to access the network by using the second network device; and sending, by using the transceiver, a first verification response to the third network device, where the first verification response carries the indication information.

In a possible implementation, the processor is further configured to: store, if the indication information indicates that the first terminal is allowed to access the network by using the second network device, the correspondence between the first terminal and the second terminal into the correspondence between a first-type terminal and a second-type terminal.

In a possible implementation, the processor is further configured to:
send, by using the transceiver if the correspondence between a first-type terminal and a second-type terminal includes the correspondence between the first terminal and the second terminal, a second verification response to the third network device, where the second verification response includes the indication information used to indicate that the first terminal is allowed to access the network by using the second network device.

In a possible implementation, the identifier includes at least one of the following information: an international mobile subscriber identity IMSI, an international mobile equipment identity IMEI, or a media access control MAC address.

According to a sixth aspect, this embodiment of this application provides a network device. The network device may be used as a third network device, and includes a processor, and a memory and a transceiver that are connected to the processor.

The processor is configured to read a computer program pre-stored in the memory to perform the following steps:
receiving, by using the transceiver, an access request sent by a second terminal, where the access request includes an identifier of a first terminal and an identifier of a second terminal, and the access request is used to request allowing the first terminal to access a network by using the second terminal; sending, by using the transceiver, a verification request to a second network device, where the verification request includes the identifier of the first terminal that has not accessed the network and the identifier of the second terminal that has accessed the network, and the verification request is used to request the second network device to verify validity of accessing, by the first terminal, the network by using the second terminal; and receiving, by using the transceiver, a verification response sent by the second network device, where the verification response includes indication information used to indicate whether the first terminal is allowed to access the network by using the second network device.

According to a seventh aspect, this embodiment of this application further provides a computer-readable storage medium. The computer-readable storage medium stores a computer instruction. When the instruction is run on a computer, the computer is enabled to perform the method according to any one of the first aspect to the third aspect.

### BRIEF DESCRIPTION OF DRAWINGS

FIG. 1 is a schematic flowchart of an authentication method for a conventional terminal according to an embodiment of this application;
FIG. 2 is a schematic diagram of access of a terminal by using a relay terminal according to an embodiment of this application;
FIG. 3 is a schematic flowchart of an authentication method according to an embodiment of this application;
FIG. 4 is a schematic flowchart of a first specific embodiment according to an embodiment of this application;
FIG. 5 is a schematic flowchart of a second specific embodiment according to an embodiment of this application;
FIG. 6 is a schematic flowchart of a third specific embodiment according to an embodiment of this application;
FIG. 7 is a schematic flowchart of a fourth specific embodiment according to an embodiment of this application;
FIG. 8 is a schematic structural diagram 1 of a network device 1 according to an embodiment of this application;
FIG. 9 is a schematic structural diagram 2 of a network device 1 according to an embodiment of this application;
FIG. 10 is a schematic structural diagram 1 of a network device 2 according to an embodiment of this application;
FIG. 11 is a schematic structural diagram 2 of a network device 2 according to an embodiment of this application;
FIG. 12 is a schematic structural diagram 1 of a network device 3 according to an embodiment of this application; and
FIG. 13 is a schematic structural diagram 2 of a network device 3 according to an embodiment of this application.

### DESCRIPTION OF EMBODIMENTS

To make the objectives, technical solutions, and advantages of this application clearer, the following further describes this application in detail with reference to the accompanying drawings.

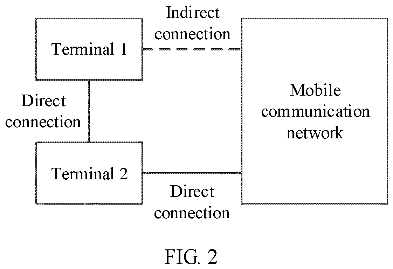

With the development of terminal technologies such as a wearable device, an intelligent device, and the like, there are more requirements for accessing a mobile communications network. To meet requirements for accessing the mobile communications network in different scenarios, technology researchers propose a technical idea that a terminal can access a mobile communications network by using another terminal with a relay function. As shown in FIG. 2, a terminal 2 is a terminal with a relay function. The terminal 2 is directly connected to a mobile communications network and a terminal 1, to implement an indirect connection between the terminal 1 and the mobile communications network. However, how to authenticate an identity of a terminal, for example, the terminal 1, that accesses a mobile communications network by using a terminal with a relay function is a problem to be resolved currently.

To resolve the foregoing problem, this embodiment of this application provides an authentication method, to authenticate a terminal that accesses a network by using another terminal.

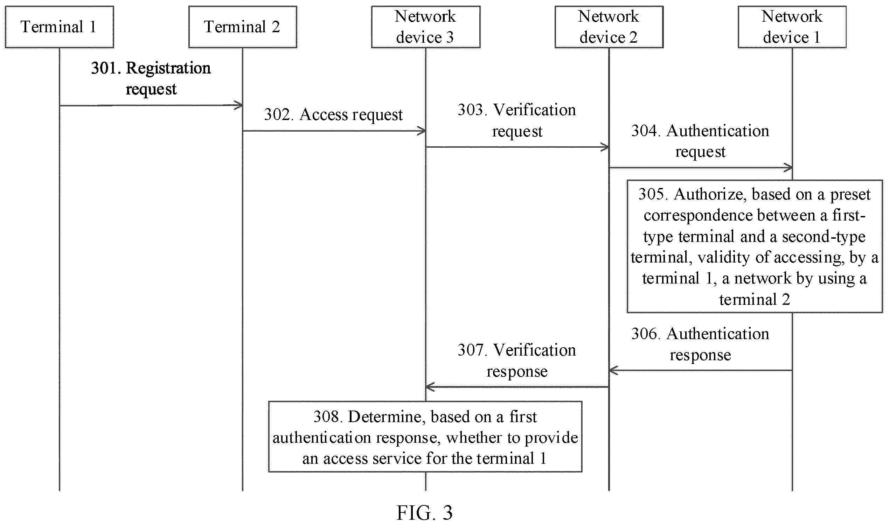

FIG. 3 is a schematic flowchart of an authentication method according to an embodiment of this application. As shown in FIG. 3, the method may include the following steps.

Step 301: The terminal 1 sends a registration request to the terminal 2.

The terminal 1 sends the registration request to the terminal 2, to register with a network side by using the terminal 2, in other words, to access a network by using the terminal 2. For example, under consideration of costs or power consumption, the terminal 1 may not include a function of network access, but may be connected to the terminal 2 with the relay function in a manner such as Bluetooth, an infrared connection, wireless fidelity (wireless fidelity, WiFi), or the like, thereby accessing the network by using the terminal 2.

The terminal 1 may be a terminal such as a wearable device, a smart medical device, a smart household device, or may be a device such as a mobile phone, a tablet computer, and this is not limited in this application.

The terminal 2 is the terminal with the relay function, for example, a device such as a mobile phone, an in-vehicle terminal, or the like.

The registration request sent by the terminal 1 carries an identifier of the terminal 1, so that the terminal 2 and the network device can identify the terminal 1. The identifier of the terminal 1 may be one or any combination of the IMSI, the IMEI or the MAC address of the terminal 1.

Specifically, the registration request can be only used to request to access, by the terminal 1, the network by using the terminal 2, and the registration request can further be sent, together with a service request, to the terminal 2 by using a same message, so that the network device can provide a service for the terminal 1 immediately after the terminal 1 access the network.

Step 302: The terminal 2 sends an access request to a network device 3.

After receiving the registration request from the terminal 1, the terminal 2 can generate an access request based on the identifier of the terminal 1 and the identifier of the terminal 2. The access request includes the identifiers of the terminal 1 and the terminal 2, to request allowing the terminal 1 to access the network by using the terminal 2.

Optionally, the terminal 2 can send the access request to the network device 3 by using non-access stratum (non-access stratum, NAS) signaling.

The network device 3 can be a control network element AMF in a core network, the AMF can be responsible for functions such as access of the terminal, mobile management, and the like.

Step 303: The network device 3 sends a verification request to a network device 2.

After receiving the access request sent by the terminal 2, the network device 3 can first request the network device 2 to verify validity of accessing, by the terminal 1, the network by using the terminal 2. If the validity verification succeeds, the network device 3 can continue to perform the access procedure for the terminal 1, and if the validity verification fails, the network device 3 rejects the access of the terminal 1 to the network by using the terminal 2.

The network device 2 may be a security center. The security center may be a network function entity that is responsible for performing authentication, authorization and other functions on the terminal, for example, an AUSF, or an authentication, authorization, and accounting (authentication, authorization and accounting, AAA) server, or may be a security center provided by a third party.

Step 304: If a preset correspondence between a first-type terminal and a second-type terminal in the network device 2 does not include a correspondence between the terminal 1 and the terminal 2, the network device 2 sends an authentication request to a network device 1.

The network device 2 may pre-store the correspondence between a first-type terminal and a second-type terminal. A first-type terminal is a terminal that is indirectly connected to the network, such as the terminal 1 in this embodiment, and a second-type terminal is a terminal that has the relay function and is directly connected to the network, such as the terminal 2 in this embodiment. If the correspondence between a first-type terminal and a second-type terminal includes the correspondence between a first-type terminal A and a second-type terminal B, it indicates that a terminal A is allowed to access the network by using the terminal B.

If the correspondence between a first-type terminal and a second-type terminal does not include the correspondence between the terminal 1 and the terminal 2, it is considered that validity of accessing, by the terminal 1, the network by using the terminal 2 was not previously verified, and the network device 2 can send the authentication request to the network device 1, so that the network device 1 may authenticate validity of accessing, by the terminal 1, the network by using the terminal 2.

Step 305: The network device 1 authenticates, based on the preset correspondence between a first-type terminal and a second-type terminal, validity of accessing, by the terminal 1, the network by using the terminal 2.

The network device 1 may be a device with subscription data of the terminal, such as a UDM, a home subscriber server (home subscriber server, HSS), a home location register (home location register, HLR), or the like, or a network function entity of a management terminal provided by the third party.

The correspondence between a first-type terminal and a second-type terminal can further be preset on the network device 1. However, correspondences between a first-type terminal and a second-type terminal stored on the network device 1 and the network device 2 may be different. The correspondence between a first-type terminal and a second-type terminal stored on the network device 2 may be a part of the correspondence between a first-type terminal and a second-type terminal stored on the network device 1. In a specific embodiment, the network device 2 may provide a service only for a specific area, and the network device 1 may provide a service only for a terminal of a specific operator. In other words, the correspondence between a first-type terminal and a second-type terminal stored on the network device 1 may include a correspondence between a first-type terminal and a second-type terminal in each area within a coverage of the operator. For example, if the terminal 1 requested to access the network by using the terminal 2 in Beijing, and the validity authentication succeeded, the network device 2 providing a service for the Beijing area and the network device 1 providing a service for areas within the coverage of the operator may store the correspondence between the terminal 1 and the terminal 2. However, after a user carrying the terminal 1 and the terminal 2 arrives at Shanghai, the terminal 1 requests to access the network by using the terminal 2 again, and the correspondence between the terminal 1 and the terminal 2 is not stored on the network device 2 providing the service for the Shanghai area. In this case, the network device 2 providing the service for the Shanghai area may send the authentication request to the network device 1, to request the network device 1 to authenticate validity of accessing, by the terminal 1, the network by using the terminal 2.

In a possible implementation, if the preset correspondence between a first-type terminal and a second-type terminal stored on the network device 1 includes the correspondence between the terminal 1 and the terminal 2, it can be determined that authentication on accessing, by the terminal 1, the network by using the terminal 2 has succeeded, and the network device 1 can determine that the terminal 1 is allowed to access the network by using the terminal 2.

In another possible implementation, if the preset correspondence between a first-type terminal and a second-type terminal on the network device 1 does not include terminal information corresponding to information of the terminal 1, the network device 1 may send a verification request to the terminal 2, and authenticate, based on a verification response sent by the terminal 2, validity of accessing, by the terminal 1, the network by using the terminal 2.

In a specific embodiment, a smartwatch requests to access the network by using a mobile phone. However, the preset correspondence between a first-type terminal and a second-type terminal on the network device 1 does not include terminal information corresponding to the smartwatch. The network device 1 may send a verification request to the mobile phone, to query whether the mobile phone allows the smartwatch to access the network by using the mobile phone. For example, the network device 1 can query, in a manner such as sending an SMS message to the mobile phone, whether the user agrees to provide a network access service for the smartwatch, the user can notify, in a manner such as replying to the SMS message, the network device 1 of information of whether the user agrees to provide the network access service for the smartwatch.

After receiving the verification response sent by the terminal 2, the network device 1 may determine, based on the verification response, whether the terminal 1 is allowed to access the network by using the terminal 2. For example, if the verification response sent by the terminal 2 includes indication information used to indicate that the terminal 1 is allowed to access the network by using the terminal 2, the network device 1 may determine that the terminal 1 is allowed to access the network by using the terminal 2, in other words, authentication succeeds; and if the verification response sent by the terminal 2 includes indication information used to indicate that the terminal 1 is not allowed to access the network by using the terminal 2, the network device 1 may determine that the terminal 1 is not allowed to access the network by using the terminal 2, in other words, authentication fails.

In another possible implementation, if the preset correspondence between a first-type terminal and a second-type terminal on the network device 1 includes a correspondence between the terminal 1 and a terminal 3, but does not include the correspondence between the terminal 1 and the terminal 2, the network device 1 can send a verification request to the terminal 3 to query whether the terminal 3 allows the terminal 1 to access the network by using the terminal 2, and authenticate, based on a verification response sent by the terminal 3, validity of accessing, by the terminal 1, the network by using the terminal 2.

In a specific embodiment, the smartwatch requests to access the network by using the mobile phone A. The preset correspondence between a first-type terminal and a second-type terminal on the network device 1 does not include a correspondence between the smartwatch and the mobile phone A, but includes a correspondence between the smartwatch and the mobile phone B. The network device 1 can send a verification request to the mobile phone B, and authenticate, based on a verification response sent by the mobile phone B, validity of accessing, by the smartwatch, the network by using the mobile phone A. The foregoing embodiment helps prevent a case in which the smartwatch can still be used by accessing the network by using another terminal after the smartwatch is stolen. For example, if the smartwatch is stolen, and a lawbreaker operates the smartwatch to request to access the network by using the mobile phone A, because the network device 1 stores the correspondence between the smartwatch and the mobile phone B, the network device can send the verification request to the mobile phone B. If an authorized subscriber operates the mobile phone B to reject access of the smartwatch to the network by using the mobile phone A, the network device 1 does not allow the smartwatch to access the network by using the mobile phone A, in other words, the lawbreaker cannot continue to use the smartwatch.

In a possible implementation, after the network device receives the verification response sent by the terminal 2 or the terminal 3, where the verification response includes the indication information used to indicate that the terminal 1 is allowed to access the network by using the terminal 2, the network device 1 can store the correspondence between the terminal 1 and the terminal 2 in the correspondence between a first-type terminal and a second-type terminal, so that when the terminal 1 requests to access the network by using the terminal 2 again, the network device 1 can directly allow, based on the stored correspondence, the terminal 1 to access the network by using the terminal 2, without having to initiate an authentication procedure again.

Optionally, the correspondence between a first-type terminal and a second-type terminal may include correspondences between the terminal 1 and a plurality of terminals, or the terminal 1 is only allowed to have a correspondence with one terminal. For example, if the correspondence between a first-type terminal and a second-type terminal has included the correspondence between the terminal 1 and the terminal 3, the network device 1 can keep the correspondence between the terminal 1 and the terminal 3, and add the correspondence between the terminal 1 and the terminal 2, indicating that the terminal 1 is allowed to access the network by using the terminal 2 or the terminal 3. Alternatively, the network device 1 may further delete the correspondence between the terminal 1 and the terminal 3, and add the correspondence between the terminal 1 and the terminal 2, indicating that the terminal 1 is only allowed to access the network by using the terminal 2.

Step 306: The network device 1 sends an authentication response to a network device 2.

The authentication response sent by the network device 1 carries the indication information used to indicate whether the terminal 1 is allowed to access the network by using the terminal 2.

Step 307: The network device 2 sends a first verification response to a network device 3.

The first verification response sent by the network device 2 includes the indication information used to indicate whether the terminal 1 is allowed to access the network by using the terminal 2.

In a possible implementation, if the authentication response that is received by the network device 2 and sent by the network device 1 carries the indication information used to indicate that the terminal 1 is allowed to access the network by using the terminal 2, the network device 2 can store the correspondence between the terminal 1 and the terminal 2 in the correspondence between a first-type terminal and a second-type terminal stored by the network device 2, so that when the terminal 1 requests to access the network by using the terminal 2 again, the network device 2 can directly allow, based on the stored correspondence, the terminal 1 to access the network by using the terminal 2, without having to initiate an authentication procedure to the network device 1 again.

Step 308: The network device 3 determines, based on the first verification response, whether to provide an access service for the terminal 1.

If the indication information carried in the first verification response sent by the network device 2 indicates that the terminal 1 is allowed to access the network by using the terminal 2, the network device 3 can continue to perform the access procedure of the terminal 1, and may further send an access response to the terminal 2, where the response includes the indication information that the terminal 1 is allowed to access the network by using the terminal 2. Otherwise, the network device 3 can reject the access of the terminal 1, and may further send a message to the terminal 2 after determining to reject the access of the terminal 1, where the message includes the indication information that the terminal 1 is not allowed to access the network by using the terminal 2.

In a possible implementation, after step 303, if the preset correspondence between a first-type terminal and a second-type terminal on the network device 2 includes the correspondence between the terminal 1 and the terminal 2, it is considered that validity of accessing, by the terminal 1, the network by using the terminal 2 has been previously verified, and the terminal 1 is allowed to access the network by using the terminal 2. Correspondingly, the network device 2 can send a second verification response to the network device 3, where the second verification response includes the indication information used to indicate that the terminal 1 is allowed to access the network by using the terminal 2, and may skip performing step 304 to step 308. After receiving the second verification response, the network device 3 can provide the access service for the terminal 1.

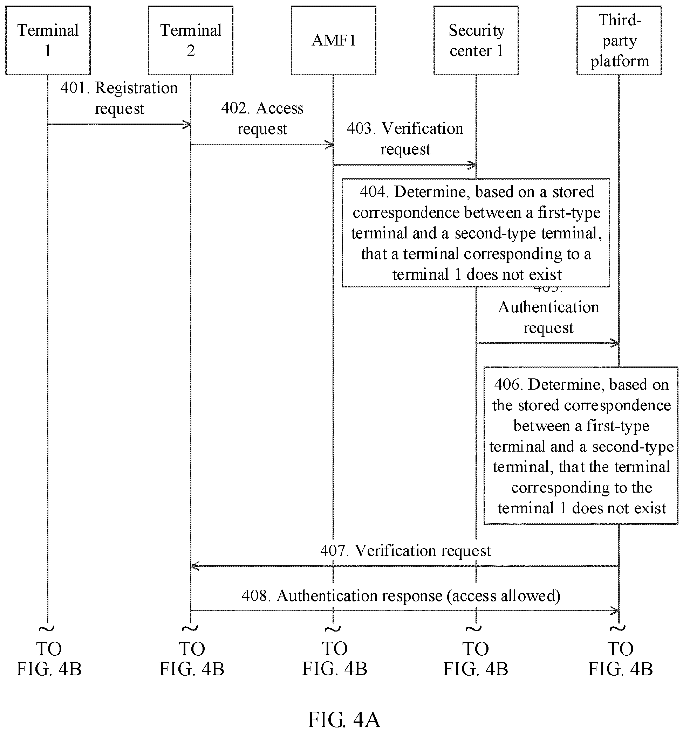

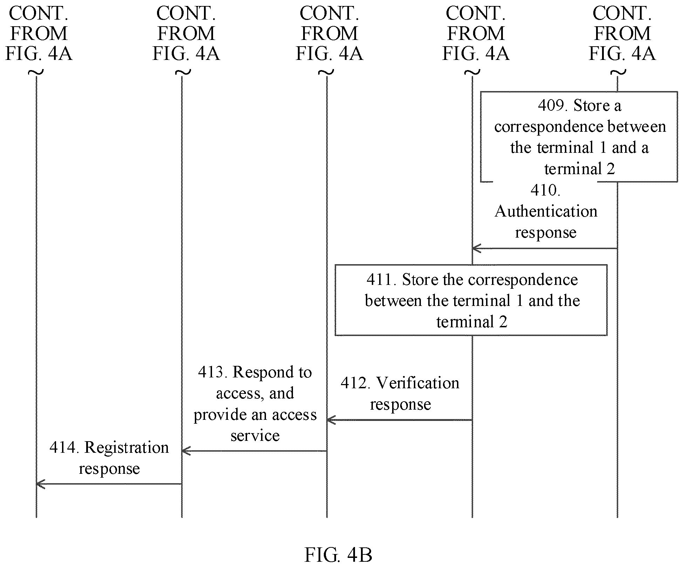

For clearer understanding of the authentication method provided by this embodiment of this application, examples of FIG. 4 to FIG. 7 are used below for further description.

FIG. 4 is a schematic flowchart when a terminal 1 requests, for the first time, to access the network by using another terminal. As shown in the diagram, the following steps may be included.

Step 401: The terminal 1 sends a registration request to a terminal 2, where the registration request includes an identifier of the terminal 1.

Step 402: The terminal 2 sends an access request to an AMF1, where the access request includes the identifier of the terminal 1 and an identifier of the terminal 2. The AMF1 is configured to provide a service for a user in a Beijing area.

Step 403: The AMF1 sends a verification request to a security center 1, where the verification request includes the identifiers of the terminal 1 and the terminal 2. The security center 1 is configured to provide a service for the user in the Beijing area. Step 404: The security center 1 determines, based on the stored correspondence between a first-type terminal and a second-type terminal, that a terminal corresponding to the terminal 1 does not exist.

Because the terminal 1 requests to access the network by using another terminal for the first time, the security center 1 does not store a correspondence about the terminal 1.

Step 405: The security center 1 sends an authentication request to a third-party platform, where the authentication request includes the identifiers of the terminal 1 and the terminal 2. The third-party platform is used to provide a service for national users.

Step 406: The third-party platform determines, based on the stored correspondence between a first-type terminal and a second-type terminal, that the terminal corresponding to the terminal 1 does not exist.

Because the terminal 1 requests to access the network by using another terminal for the first time, the third-party platform does not store a correspondence about the terminal 1 either.

Step 407: The third-party platform sends a verification request to the terminal 2, where the verification request includes the identifier of the terminal 1, to query whether the terminal 2 allows the terminal 1 to access the network by using the terminal 2.

Step 408: The terminal 2 sends a verification response to the third-party platform, and continues to perform subsequent steps if the verification response indicates that the terminal 1 is allowed to access the network, otherwise the procedure ends.

Step 409: The third-party platform stores the correspondence between the terminal 1 and the terminal 2.

Step 410: The third-party platform sends an authentication response to the security center 1, where the authentication response includes the indication information that the terminal 1 is allowed to access the network by using the terminal 2.

A sequence for performing step 409 and step 410 is not limited in this application, and the third-party platform can further send the authentication response to the security center 1 before storing the correspondence between the terminal 1 and the terminal 2. Step 411: The security center 1 stores the correspondence between the terminal 1 and the terminal 2.

Step 412: The security center 1 sends a verification response to the AMF1, where the verification response includes the indication information that the terminal 1 is allowed to access the network by using the terminal 2.

Similarly, a sequence for performing step 411 and step 412 is not limited in this application, and the security center 1 can further send the verification response to the AMF1 before storing the correspondence between the terminal 1 and the terminal 2. Step 413: The AMF1 provides an access service for the terminal 1, and sends an access response to the terminal 2, where the access response includes the indication information that the terminal 1 is allowed to access the network by using the terminal 2.

Step 414: The terminal 2 sends a registration response to the terminal 1, where the registration response includes the indication information that the terminal 1 is allowed to access the network by using the terminal 2.

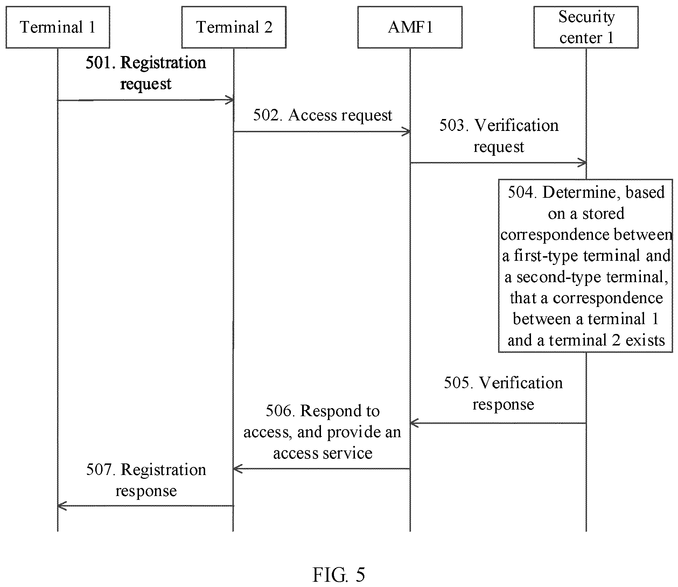

FIG. 5 is a schematic flowchart when a terminal 1 requests again to access the network by using another terminal. As shown in the diagram, the following steps may be included.

Step 501 to step 503 are the same as step 401 to step 403. Details are not described again.

Step 504: The security center 1 determines, based on the stored correspondence between a first-type terminal and a second-type terminal, that the correspondence between the terminal 1 and the terminal 2 exists.

Step 505: The security center 1 sends a verification response to the AMF1, where the verification response includes the indication information that the terminal 1 is allowed to access the network by using the terminal 2.

Step 506: The AMF1 provides an access service for the terminal 1, and sends an access response to the terminal 2, where the access response includes the indication information that the terminal 1 is allowed to access the network by using the terminal 2.

Step 507: The terminal 2 sends a registration response to the terminal 1, where the registration response includes the indication information that the terminal 1 is allowed to access the network by using the terminal 2.

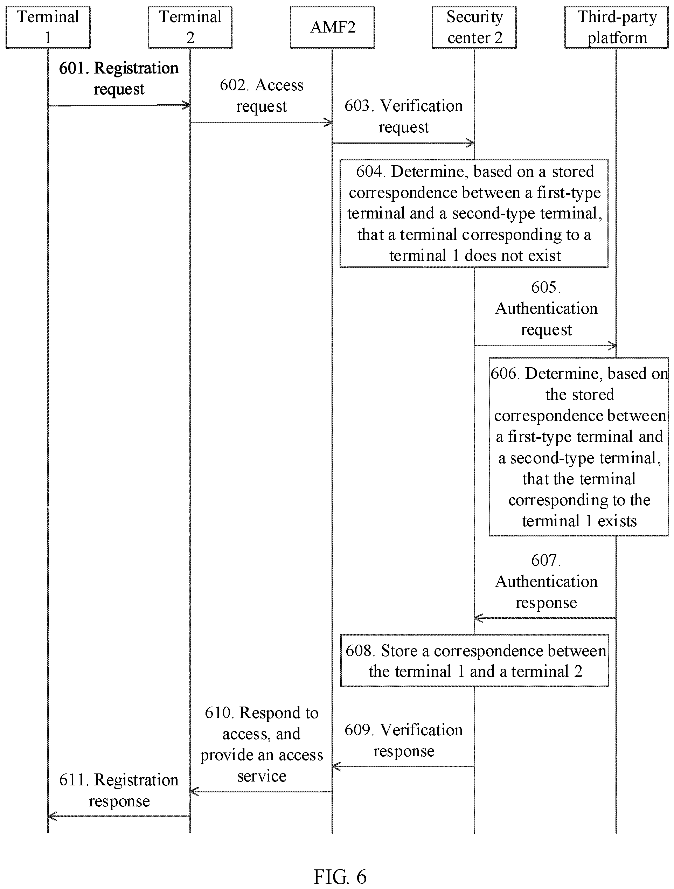

FIG. 6 is a schematic flowchart when a terminal 1 requests again to access the network by using another terminal. As shown in the diagram, the following steps may be included.

Step 601: The terminal 1 sends a registration request to a terminal 2, where the registration request includes an identifier of the terminal 1.

Step 602: The terminal 2 sends an access request to an AMF2, where the access request includes the identifier of the terminal 1 and an identifier of the terminal 2. The AMF2 is configured to provide a service for a user in a Shanghai area.

Step 603: The AMF2 sends a verification request to a security center 2, where the verification request includes the identifiers of the terminal 1 and the terminal 2. The security center 2 is configured to provide a service for the user in the Shanghai area. Step 604: The security center 2 determines, based on the stored correspondence between a first-type terminal and a second-type terminal, that the correspondence between the terminal 1 and the terminal 2 does not exist.

Step 605: The security center 2 sends an authentication request to a third-party platform, where the authentication request includes the identifiers of the terminal 1 and the terminal 2.

Step 606: The third-party platform determines, based on the stored correspondence between a first-type terminal and a second-type terminal, that the correspondence between the terminal 1 and the terminal 2 exists.

Step 607: The third-party platform sends an authentication response to the security center 2, where the authentication response includes the indication information that the terminal 1 is allowed to access the network by using the terminal 2.

Step 608: The security center 2 stores the correspondence between the terminal 1 and the terminal 2.

Step 609: The security center 2 sends a verification response to the AMF2, where the verification response includes the indication information that the terminal 1 is allowed to access the network by using the terminal 2.

Step 610: The AMF2 provides an access service for the terminal 1, and sends an access response to the terminal 2, where the access response includes the indication information that the terminal 1 is allowed to access the network by using the terminal 2.

Step 611: The terminal 2 sends a registration response to the terminal 1, where the registration response includes the indication information that the terminal 1 is allowed to access the network by using the terminal 2.

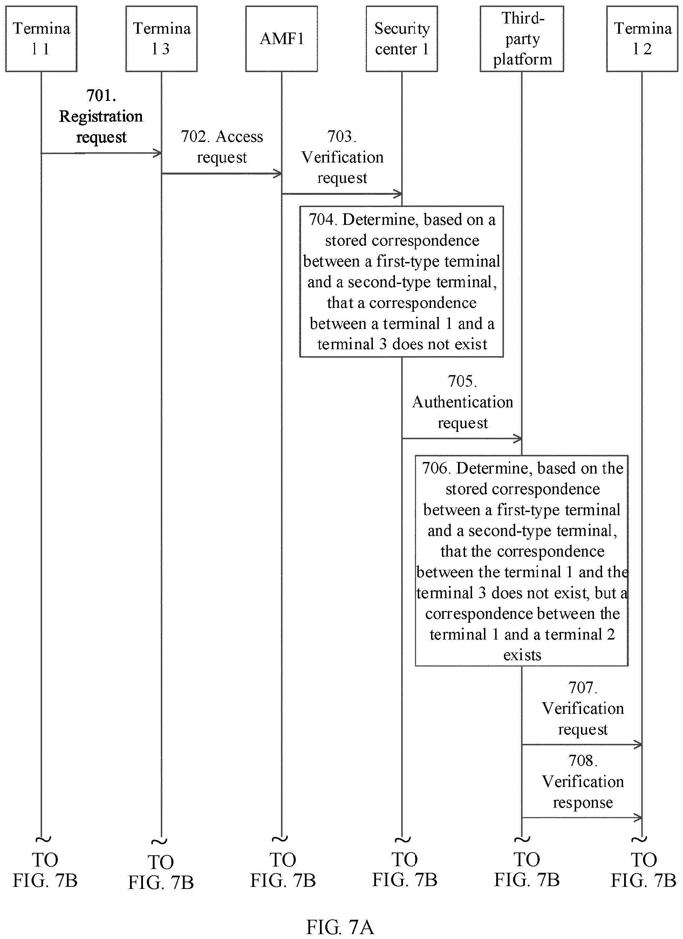

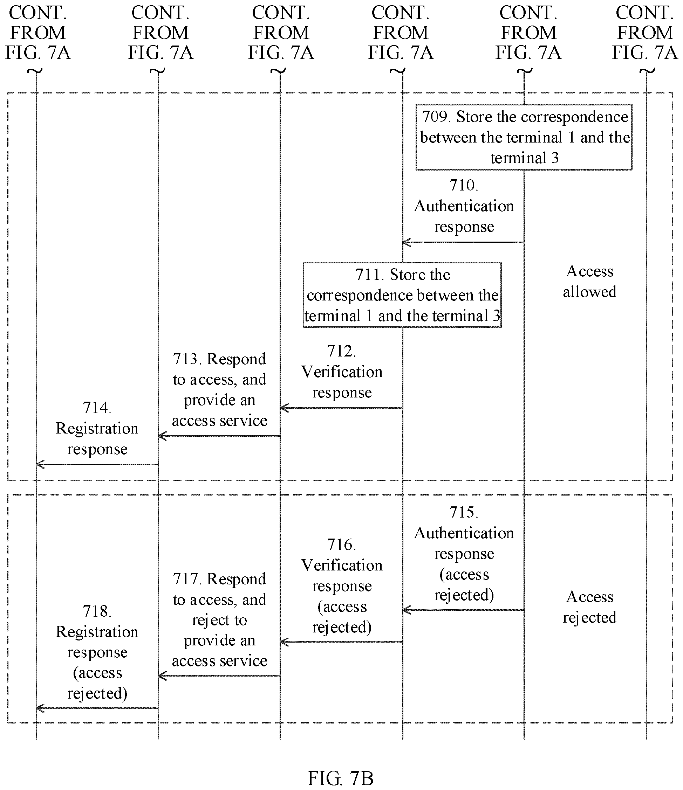

FIG. 7 is a schematic flowchart when a terminal 1 requests again to access the network by using another terminal. As shown in the diagram, the following steps may be included.

Step 701: The terminal 1 sends a registration request to a terminal 3, where the registration request includes an identifier of the terminal 1.

Step 702: The terminal 3 sends an access request to an AMF1, where the access request includes the identifier of the terminal 1 and an identifier of the terminal 3. Step 703: The AMF1 sends a verification request to a security center 1, where the verification request includes the identifiers of the terminal 1 and the terminal 3.

Step 704: The security center 1 determines, based on the stored correspondence between a first-type terminal and a second-type terminal, that the correspondence between the terminal 1 and the terminal 3 does not exist.

Step 705: The security center 1 sends an authentication request to a third-party platform, where the authentication request includes the identifiers of the terminal 1 and the terminal 3.

Step 706: The third-party platform determines, based on the stored correspondence between a first-type terminal and a second-type terminal, that the correspondence between the terminal 1 and the terminal 3 does not exist, but the correspondence between the terminal 1 and the terminal 2 exists.

Step 707: The third-party platform sends a verification request to the terminal 2, where the verification request includes the identifiers of the terminal 1 and the terminal 3, to query whether the terminal 2 allows the terminal 1 to access the network by using the terminal 3.

Step 708: The terminal 2 sends a verification response to the third-party platform, and performs step 709 to step 714 if the verification response indicates that the terminal 1 is allowed to access the network by using the terminal 3, otherwise performs step 715 to step 718.

Step 709: The third-party platform stores the correspondence between the terminal 1 and the terminal 3.

Step 710: The third-party platform sends an authentication response to the security center 1, where the authentication response includes the indication information that the terminal 1 is allowed to access the network by using the terminal 3.

Step 711: The security center 1 stores the correspondence between the terminal 1 and the terminal 3.

Step 712: The security center 1 sends a verification response to the AMF1, where the verification response includes the indication information that the terminal 1 is allowed to access the network by using the terminal 3.

Step 713: The AMF1 provides an access service for the terminal 1, and sends an access response to the terminal 3, where the access response includes the indication information that the terminal 1 is allowed to access the network by using the terminal 3.

Step 714: The terminal 3 sends a registration response to the terminal 1, where the registration response includes the indication information that the terminal 1 is allowed to access the network by using the terminal 3.

Step 715: The third-party platform sends an authentication response to the security center 1, where the authentication response includes the indication information that the terminal 1 is not allowed to access the network by using the terminal 3.

Step 716: The security center 1 sends a verification response to the AMF1, where the verification response includes the indication information that the terminal 1 is not allowed to access the network by using the terminal 3.

Step 717: The AMF1 rejects to provide an access service for the terminal 1, and sends an access response to the terminal 3, where the access response includes the indication information that the terminal 1 is not allowed to access the network by using the terminal 3.

Step 718: The terminal 3 sends a registration response to the terminal 1, where the registration response includes the indication information that the terminal 1 is not allowed to access the network by using the terminal 3.

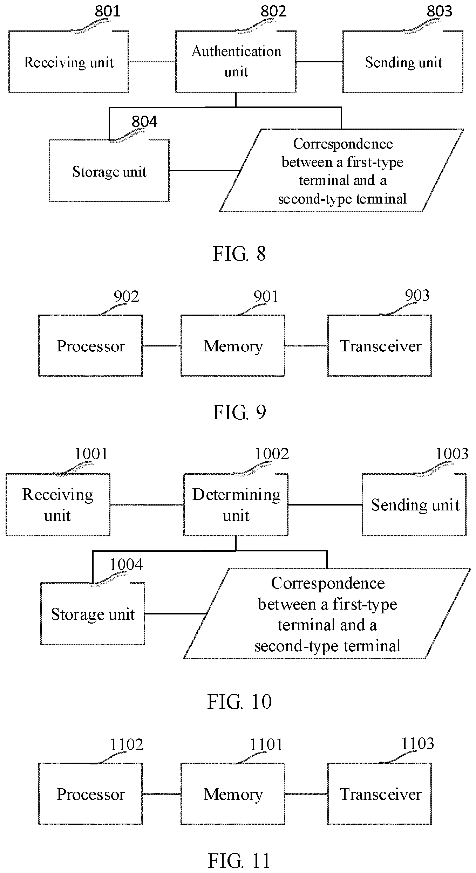

Based on the same technical idea, this embodiment of this application further provides a network device, to implement the method process of the network device 1 in the foregoing method embodiment. FIG. 8 is a schematic structural diagram of a network device 1 according to this embodiment of this application. As shown in the diagram, the network device 1 includes a receiving unit 801, an authentication unit 802, and a sending unit 803. Further, the network device may also include a storage unit 804. The receiving unit 801 is configured to receive an authentication request sent by a second network device, where the authentication request includes an identifier of a first terminal that has not accessed a network and an identifier of a second terminal that has accessed the network.

The authentication unit 802 is configured to authenticate, based on a preset correspondence between a first-type terminal and a second-type terminal, validity of accessing, by the first terminal, the network by using the second terminal, where a first-type terminal is allowed to access the network by using a second-type terminal corresponding to the first-type terminal.

The sending unit 803 is configured to send an authentication response to the second network device, where the authentication response carries indication information used to indicate whether the first terminal is allowed to access the network by using the second terminal.

In a possible implementation, the authentication unit 802 is specifically configured to allow, if the correspondence between a first-type terminal and a second-type terminal includes a correspondence between the first terminal and the second terminal, the first terminal to access the network by using the second terminal.

In a possible implementation, the authentication unit 802 is specifically configured to: send, by using the sending unit 803 if the correspondence between a first-type terminal and a second-type terminal does not include terminal information corresponding to first terminal information, a verification request to the second terminal; and receive, by using the receiving unit 801, a verification response sent by the second terminal, where the verification response includes the indication information used to indicate whether the first terminal is allowed to access the network by using the second terminal.

In a possible implementation, the authentication unit 802 is specifically configured to: send, by using the sending unit 803 if terminal information that is in the correspondence between a first-type terminal and a second-type terminal and corresponds to first terminal information does not include second terminal information, a verification request to a third terminal, where the third terminal is a terminal corresponding to the terminal information corresponding to the first terminal information in the correspondence between a first-type terminal and a second-type terminal; and receive, by using the receiving unit 801, a verification response sent by the third terminal, where the verification response includes the indication information used to indicate whether the first terminal is allowed to access the network by using the second terminal.

In a possible implementation, if the indication information indicates that the first terminal is allowed to access the network by using the second terminal, the network device 1 further includes: a storage unit 804, configured to: store the correspondence between the first terminal and the second terminal into the correspondence between a first-type terminal and a second-type terminal.

In a possible implementation, the identifier includes at least one of the following information: an international mobile subscriber identity IMSI, an international mobile equipment identity IMEI, or a media access control MAC address.

Based on the same technical idea, this embodiment of this application further provides a network device, to implement the method process of the network device 1 in the foregoing method embodiment. FIG. 9 is a schematic structural diagram of a network device 1 according to this embodiment of this application. As shown in the diagram, the network device 1 includes: a processor 901, and a memory 902 and a transceiver 903 that are connected to the processor 901.

The processor 901 is configured to read a computer program pre-stored in the memory 902 to perform the following steps:
receiving, by using the transceiver 903, an authentication request sent by a second network device, where the authentication request includes an identifier of a first terminal that is unconnected to a network and an identifier of a second terminal that is connected to the network; authenticating, based on a preset correspondence between a first-type terminal and a second-type terminal, validity of accessing, by the first terminal, the network by using the second terminal, where a first-type terminal is allowed to access the network by using a second-type terminal corresponding to the first-type terminal; and sending, by using the transceiver 903, an authentication response to the second network device, where the authentication response carries indication information used to indicate whether the first terminal is allowed to access the network by using the second terminal.

In a possible implementation, when authenticating, based on the preset correspondence between a first-type terminal and a second-type terminal, validity of accessing, by the first terminal, the network by using the second terminal, the processor 901 is specifically configured to: allow, if the correspondence between a first-type terminal and a second-type terminal includes a correspondence between the first terminal and the second terminal, the first terminal to access the network by using the second terminal.

In a possible implementation, when authenticating, based on the preset correspondence between a first-type terminal and a second-type terminal, validity of accessing, by the first terminal, the network by using the second terminal, the processor 901 is specifically configured to: send, by using the transceiver 903 if the correspondence between a first-type terminal and a second-type terminal does not include terminal information corresponding to first terminal information, a verification request to the second terminal; and receive, by using the transceiver 903, a verification response sent by the second terminal, where the verification response includes the indication information used to indicate whether the first terminal is allowed to access the network by using the second terminal.

In a possible implementation, when authenticating, based on the preset correspondence between a first-type terminal and a second-type terminal, validity of accessing, by the first terminal, the network by using the second terminal, the processor 901 is specifically configured to: send, by using the transceiver 903 if terminal information that is in the correspondence between a first-type terminal and a second-type terminal and corresponds to first terminal information does not include second terminal information, a verification request to a third terminal, where the third terminal is a terminal corresponding to the terminal information corresponding to the first terminal information in the correspondence between a first-type terminal and a second-type terminal; and receive, by using the transceiver 903, a verification response sent by the third terminal, where the verification response includes the indication information used to indicate whether the first terminal is allowed to access the network by using the second terminal.

In a possible implementation, if the indication information indicates that the first terminal is allowed to access the network by using the second terminal, the processor 901 is further configured to: store the correspondence between the first terminal and the second terminal into the correspondence between a first-type terminal and a second-type terminal.

In a possible implementation, the identifier includes at least one of the following information: an IMSI, an IMEI or a MAC address.

Based on the same technical idea, this embodiment of this application further provides a network device, to implement the method process of the network device 2 in the foregoing method embodiment. FIG. 10 is a schematic structural diagram of a network device 2 according to this embodiment of this application. As shown in the diagram, the network device 2 includes a receiving unit 1001, a determining unit 1002, and a sending unit 1003. Further, the network device 2 may also include a storage unit 1004. The receiving unit 1001 is configured to receive a verification request sent by a third network device, where the verification request includes an identifier of a first terminal that has not accessed a network and an identifier of a second terminal that has accessed the network, and the verification request is used to request the second network device to verify validity of accessing, by the first terminal, the network by using the second terminal.

The determining unit 1002 is configured to determine whether a correspondence between a first-type terminal and a second-type terminal includes a correspondence between the first terminal and the second terminal.

The sending unit 1003 is configured to send, if a correspondence between a first-type terminal and a second-type terminal does not include a correspondence between the first terminal and the second terminal, an authentication request to a first network device, where the authentication request includes the identifier of the first terminal and the identifier of the second terminal, and the authentication request is used to request the first network device to authenticate validity of accessing, by the first terminal, the network by using the second terminal.

The receiving unit 1001 is further configured to receive an authentication response sent by the first network device, where the authentication response carries indication information used to indicate whether the first terminal is allowed to access the network by using the second network device.

The sending unit 1003 is further configured to send a first verification response to the third network device, where the first verification response carries the indication information.

In a possible implementation, the network device may further include: a storage unit 1004, configured to store, if the indication information indicates that the first terminal is allowed to access the network by using the second network device, the correspondence between the first terminal and the second terminal into the correspondence between a first-type terminal and a second-type terminal.

In a possible implementation, if the determining unit 1002 determines that the correspondence between a first-type terminal and a second-type terminal includes a correspondence between the first terminal and the second terminal, the sending unit 1003 is further configured to send a second verification response to the third network device, where the second verification response includes the indication information used to indicate that the first terminal is allowed to access the network by using the second network device.

In a possible implementation, the identifier includes at least one of the following information: an international mobile subscriber identity IMSI, an international mobile equipment identity IMEI, or a media access control MAC address.

Based on the same technical idea, this embodiment of this application further provides a network device, to implement the method process of the network device 2 in the foregoing method embodiment. FIG. 11 is a schematic structural diagram of a network device 2 according to this embodiment of this application. As shown in the diagram, the network device 2 includes: a processor 1101, and a memory 1102 and a transceiver 1103 that are connected to the processor 1101.

The processor 1101 is configured to read a computer program pre-stored in the memory 1102 to perform the following steps:
receiving, by using the transceiver 1103, a verification request sent by a third network device, where the verification request includes an identifier of a first terminal that has not accessed a network and an identifier of a second terminal that has accessed the network, and the verification request is used to request the second network device to verify validity of accessing, by the first terminal, the network by using the second terminal; sending, by using the transceiver 1103 if a correspondence between a first-type terminal and a second-type terminal does not include a correspondence between the first terminal and the second terminal, an authentication request to a first network device, where the authentication request includes the identifier of the first terminal and the identifier of the second terminal, and the authentication request is used to request the first network device to authenticate validity of accessing, by the first terminal, the network by using the second terminal; receiving, by using the transceiver 1103, an authentication response sent by the first network device, where the authentication response carries indication information used to indicate whether the first terminal is allowed to access the network by using the second network device; and sending, by using the transceiver 1103, a first verification response to the third network device, where the first verification response carries the indication information.

In a possible implementation, the processor 1101 is further configured to: store, if the indication information indicates that the first terminal is allowed to access the network by using the second network device, the correspondence between the first terminal and the second terminal into the correspondence between a first-type terminal and a second-type terminal.

In a possible implementation, the processor 1101 is further configured to:
send, by using the transceiver 1103 if the correspondence between a first-type terminal and a second-type terminal includes the correspondence between the first terminal and the second terminal, a second verification response to the third network device, where the second verification response includes the indication information used to indicate that the first terminal is allowed to access the network by using the second network device.

In a possible implementation, the identifier includes at least one of the following information: an international mobile subscriber identity IMSI, an international mobile equipment identity IMEI, or a media access control MAC address.

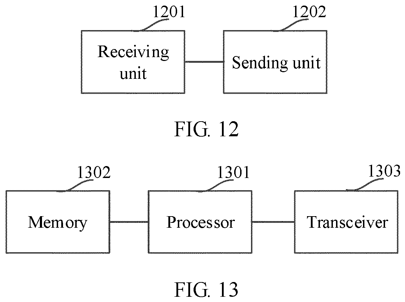

Based on the same technical idea, this embodiment of this application further provides a network device, to implement the method process of the network device 3 in the foregoing method embodiment. FIG. 12 is a schematic structural diagram of a network device 3 according to this embodiment of this application. As shown in the diagram, the network device 3 includes a receiving unit 1201 and a sending unit 1202.

The receiving unit 1201 is configured to receive an access request sent by a second terminal, where the access request includes an identifier of a first terminal and an identifier of a second terminal, and the access request is used to request allowing the first terminal to access a network by using the second terminal.

The sending unit 1202 is configured to send a verification request to a second network device, where the verification request includes an identifier of a first terminal that has not accessed a network and an identifier of a second terminal that has accessed the network, and the verification request is used to request the second network device to verify validity of accessing, by the first terminal, the network by using the second terminal.

The receiving unit 1201 is further configured to receive a verification response sent by the second network device, where the verification response includes indication information used to indicate whether the first terminal is allowed to access the network by using the second network device.

Based on the same technical idea, this embodiment of this application further provides a network device, to implement the method process of the network device 3 in the foregoing method embodiment. FIG. 13 is a schematic structural diagram of a network device 2 according to this embodiment of this application. As shown in the diagram, the network device 3 includes: a processor 1301, and a memory 1302 and a transceiver 1303 that are connected to the processor 1301.

The processor 1301 is configured to read a computer program pre-stored in the memory 1302 to perform the following steps:
receiving, by using the transceiver 1303, an access request sent by a second terminal, where the access request includes an identifier of a first terminal and an identifier of a second terminal, and the access request is used to request allowing the first terminal to access a network by using the second terminal; sending, by using the transceiver 1303, a verification request to a second network device, where the verification request includes the identifier of the first terminal that has not accessed the network and the identifier of the second terminal that has accessed the network, and the verification request is used to request the second network device to verify validity of accessing, by the first terminal, the network by using the second terminal; and receiving, by using the transceiver 1303, a verification response sent by the second network device, where the verification response includes indication information used to indicate whether the first terminal is allowed to access the network by using the second network device.

Based on the same technical idea, this embodiment of this application further provides a computer-readable storage medium. The computer-readable storage medium stores a computer instruction. When the instruction is run on a computer, the computer is enabled to perform any one of the foregoing method embodiments.

Persons skilled in the art should understand that the embodiments of the present application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk storage, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams. These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may also be loaded onto a computer or any other programmable data processing device, so that a series of operations and steps are performed on the computer or the another programmable device, thereby generating computer-implemented processing. Therefore, the instructions executed on the computer or any other programmable device provide steps for implementing a specific function in one or more processes in the flowcharts and/or in one or more blocks in the block diagrams.

## Claims

1. An authentication method performed by a first network device, the method comprising:
• receiving (step 705) an authentication request from a second network device, wherein the authentication request comprises an identifier of a first terminal that has not accessed a network and an identifier of a second terminal that has accessed the network;
• authenticating (step 706), based on a preset correspondence between a first-type terminal and a second-type terminal, validity of accessing, by the first terminal, the network by using the second terminal, wherein the first-type terminal is allowed to access the network by using the second-type terminal corresponding to the first-type terminal,
wherein the authenticating, based on the preset correspondence between the first-type terminal and the second-type terminal, validity of accessing, by the first terminal,
the network by using the second terminal comprises:
o if the correspondence between the first-type terminal and the second-type terminal comprises a correspondence between the first terminal and the second terminal, allowing the first terminal to access the network by using the second terminal;
o if the correspondence between the first-type terminal and the second-type terminal does not comprise the correspondence between the first terminal and the second terminal, but comprises a correspondence between the first terminal and a third terminal:
▪ sending (step 707) a verification request to the third terminal; and
▪ receiving (step 708) a verification response from the third terminal, wherein the verification response comprises first indication information used to indicate whether the first terminal is allowed to access the network by using the second terminal;
• sending (steps 710, 715) an authentication response to the second network device, wherein the authentication response carries, as a result of the authentication, second indication information used to indicate whether the first terminal is allowed to access the network by using the second terminal.

2. The method according to claim 1, wherein, if the first indication information indicates that the first terminal is allowed to access the network by using the second terminal, the method further comprises:
o storing a correspondence between the first terminal and the second terminal into the correspondence between the first-type terminal and the second-type terminal.

3. The method according to claim 1, wherein the identifier comprises at least one of the following information: an international mobile subscriber identity, IMSI, an international mobile equipment identity, IMEI, or a media access control, MAC address.

4. A first network device configured to perform the method according to any one of claims 1 to 3.

5. A computer-readable storage medium, wherein the computer-readable storage medium stores a computer instruction, and when the instruction is run on a computer of a first network device, the computer is enabled to perform the method according to any one of claims 1 to 3.

## Patentansprüche

1. Authentifizierungsverfahren, das durch eine erste Netzwerkvorrichtung durchgeführt wird, das Verfahren umfassend:
• Empfangen (Schritt 705) einer Authentifizierungsanforderung von einer zweiten Netzwerkvorrichtung, wobei die Authentifizierungsanforderung einen Bezeichner eines ersten Endgeräts, das nicht auf ein Netzwerk zugegriffen hat, und einen Bezeichner eines zweiten Endgeräts, das auf das Netzwerk zugegriffen hat, umfasst;
• Authentifizieren (Schritt 706), basierend auf einer voreingestellten Übereinstimmung zwischen einem Endgerät erster Art und einem Endgerät zweiter Art, einer Gültigkeit eines Zugreifens, durch das erste Endgerät, auf das Netzwerk durch Verwenden des zweiten Endgeräts, wobei es dem Endgerät erster Art durch Verwenden des Endgeräts zweiter Art, das mit dem Endgerät erster Art übereinstimmt, gestattet ist, auf das Netzwerk zuzugreifen,
wobei das Authentifizieren, basierend auf der voreingestellten Übereinstimmung zwischen dem Endgerät erster Art und dem Endgerät zweiter Art, der Gültigkeit des Zugreifens, durch das erste Endgerät,
auf das Netzwerk durch Verwenden des zweiten Endgeräts umfasst:
o falls die Übereinstimmung zwischen dem Endgerät erster Art und dem Endgerät zweiter Art eine Übereinstimmung zwischen dem ersten Endgerät und dem zweiten Endgerät umfasst, Gestatten, dass das erste Endgerät durch Verwenden des zweiten Endgeräts auf das Netzwerk zugreift;
∘ falls die Übereinstimmung zwischen dem Endgerät erster Art und dem Endgerät zweiter Art nicht die Übereinstimmung zwischen dem ersten Endgerät und dem zweiten Endgerät umfasst, sondern eine Übereinstimmung zwischen dem ersten Endgerät und einem dritten Endgerät umfasst:
▪ Senden (Schritt 707) einer Verifizierungsanforderung an das dritte Endgerät; und
▪ Empfangen (Schritt 708) einer Verifizierungsantwort von dem dritten Endgerät, wobei die Verifizierungsantwort erste Anzeigeinformationen, die verwendet werden, um anzuzeigen, ob es dem ersten Endgerät gestattet ist, durch Verwenden des zweiten Endgeräts auf das Netzwerk zuzugreifen, umfasst;
• Senden (Schritte 710, 715) einer Authentifizierungsantwort an die zweite Netzwerkvorrichtung, wobei die Authentifizierungsantwort, als ein Ergebnis der Authentifizierung, zweite Anzeigeinformationen trägt, die verwendet werden, um anzuzeigen, ob es dem ersten Endgerät gestattet ist, durch Verwenden des zweiten Endgeräts auf das Netzwerk zuzugreifen.

2. Verfahren nach Anspruch 1, wobei, falls die ersten Anzeigeinformationen anzeigen, dass es dem ersten Endgerät gestattet ist, durch Verwenden des zweiten Endgeräts auf das Netzwerk zuzugreifen, das Verfahren ferner umfasst:
o Speichern einer Übereinstimmung zwischen dem ersten Endgerät und dem zweiten Endgerät in die Übereinstimmung zwischen dem Endgerät erster Art und dem Endgerät zweiter Art.

3. Verfahren nach Anspruch 1, wobei der Bezeichner mindestens eine der folgenden Informationen umfasst: eine internationale Mobilteilnehmerkennung (international mobile subscriber identity - IMSI), eine internationale Mobilgerätekennung (international mobile equipment identity - IMEI) oder eine Medienzugriffssteuer(Media Access Control - MAC)-Adresse.

4. Erste Netzwerkvorrichtung, die konfiguriert ist, um das Verfahren nach einem der Ansprüche 1 bis 3 durchzuführen.

5. Computerlesbares Speichermedium, wobei das computerlesbare Speichermedium eine Computeranweisung speichert und, wenn die Anweisung auf einem Computer einer ersten Netzwerkvorrichtung ausgeführt wird, der Computer aktiviert wird, um das Verfahren nach einem der Ansprüche 1 bis 3 durchzuführen.

## Revendications

1. Procédé d'authentification effectué par un premier dispositif de réseau, le procédé comprenant :
• la réception (étape 705) d'une demande d'authentification en provenance d'un second dispositif de réseau, la demande d'authentification comprenant un identifiant d'un premier terminal qui n'a pas accédé à un réseau et un identifiant d'un deuxième terminal qui a accédé au réseau ;
• l'authentification (étape 706), sur la base d'une correspondance prédéfinie entre un terminal de premier type et un terminal de second type, de la validité de l'accès, par le premier terminal, au réseau en utilisant le deuxième terminal, le terminal de premier type étant autorisé à accéder au réseau en utilisant le terminal de second type correspondant au terminal de premier type,
l'authentification, sur la base de la correspondance prédéfinie entre le terminal de premier type et le terminal de second type, de la validité de l'accès, par le premier terminal, au réseau en utilisant le deuxième terminal comprenant :
∘ si la correspondance entre le terminal de premier type et le terminal de second type comprend une correspondance entre le premier terminal et le deuxième terminal, le fait de permettre au premier terminal d'accéder au réseau en utilisant le deuxième terminal ;
∘ si la correspondance entre le terminal de premier type et le terminal de second type ne comprend pas la correspondance entre le premier terminal et le deuxième terminal, mais comprend une correspondance entre le premier terminal et un troisième terminal :
▪ l'envoi (étape 707) d'une demande de vérification au troisième terminal ; et
▪ la réception (étape 708) d'une réponse de vérification en provenance du troisième terminal, la réponse de vérification comprenant des premières informations d'indication utilisées pour indiquer si le premier terminal est autorisé à accéder au réseau en utilisant le deuxième terminal ;
• l'envoi (étapes 710, 715) d'une réponse d'authentification au second dispositif de réseau, la réponse d'authentification transportant, à la suite de l'authentification, des secondes informations d'indication utilisées pour indiquer si le premier terminal est autorisé à accéder au réseau en utilisant le deuxième terminal.

2. Procédé selon la revendication 1, si les premières informations d'indication indiquent que le premier terminal est autorisé à accéder au réseau en utilisant le deuxième terminal, le procédé comprenant en outre :
o le stockage d'une correspondance entre le premier terminal et le deuxième terminal dans la correspondance entre le terminal de premier type et le terminal de second type.

3. Procédé selon la revendication 1, l'identifiant comprenant au moins l'une des informations suivantes : une identité internationale d'abonné mobile, IMSI, une identité internationale d'équipement mobile, IMEI, ou une adresse de commande d'accès au support, MAC.

4. Premier dispositif de réseau configuré pour effectuer le procédé selon l'une quelconque des revendications 1 à 3.

5. Support de stockage lisible par ordinateur, le support de stockage lisible par ordinateur stockant une instruction informatique, et lorsque l'instruction est exécutée sur un ordinateur d'un premier dispositif de réseau, l'ordinateur étant capable d'effectuer le procédé selon l'une quelconque des revendications 1 à 3.
